# EUROPEAN PATENT APPLICATION

(11) **EP 4 475 343 A2**
(43) Date of publication of application: **11.12.2024**
(21) Application number: 24165328.6
(22) Date of filing: 21.03.2024
(51) Int. Cl.: H01R 11/00, H01M 50/505, H01M 50/517

(54) **BATTERY CONNECTOR SYSTEM**

(30) Priority: 22.03.2023 US 202318187710
(71) Applicant: TE Connectivity Solutions GmbH, 8200 Schaffhausen (CH)
(72) Inventor: Shimmel, Destin, Mount Joy, PA17552 (US); Annis, Kyle Gary, Middletown, PA17057 (US); Gingrich, Charles Raymond III, Middletown, PA17057 (US)
(74) Representative: Ashton, Gareth Mark

(57) **Abstract**

A battery connector assembly (102) includes a first battery connector (104) having a first battery contact (200). The first battery contact (200) has a first separable mating interface (206). The first battery contact (200) is electrically connected to a first battery terminal (40) of a first battery module (10). The battery connector assembly (102) includes a second battery connector (106) having a second battery contact (300). The second battery contact (300) has a second separable mating interface (306). The second battery contact (300) is electrically connected to a second battery terminal (40) of a second battery module (12). The battery connector assembly (102) includes a jumper (108) electrically connecting the first battery connector (104) and the second battery connector (106). The jumper (108) includes a jumper conductor (110) having a first end (112) and a second end (114). The first end (112) of the jumper conductor (110) is electrically connected to the first battery contact (200). The second end (114) of the jumper conductor (110) is electrically connected to the second battery contact (300).

## Description

The subject matter herein relates generally to battery connector systems.

Battery connectors are used to electrically connect terminals of batteries. Typically, a busbar is used to electrically connect the terminals of the batteries. For example, the busbar spans across the gap between the batteries and is welded to the battery terminals or secured using threaded fasteners. The busbar defines a fixed connection between the battery terminals. Such connections are susceptible to damage or failure over time due, particularly when utilized in harsh environments subject to stresses from vibration and shock. Battery systems in vehicles may be subject to such harsh conditions. For example, batteries used in aircraft vehicles, such as to power electric-vertical-take-off-and-landing (eVTOL) systems, are subject to high stress from vibration and impact during use. Such battery systems are also subject to high power and usage, which may cause risk of damage from fire due to overheating.

A need remains for a robust batter connector system.

The solution is provided by a battery connector assembly and includes a first battery connector having a first battery contact. The first battery contact has a first separable mating interface. The first battery contact is electrically connected to a first battery terminal of a first battery module. The battery connector assembly includes a second battery connector having a second battery contact. The second battery contact has a second separable mating interface. The second battery contact is electrically connected to a second battery terminal of a second battery module. The battery connector assembly includes a jumper that electrically connects the first battery connector and the second battery connector. The jumper includes a jumper conductor that has a first end and a second end. The first end of the jumper conductor is electrically connected to the first battery contact. The second end of the jumper conductor is electrically connected to the second battery contact.

The invention will now be described by way of example with reference to the accompanying drawings in which:
Figure 1 is a schematic view of a battery connector system in accordance with an exemplary embodiment.
Figure 2 is a front perspective view of the battery connector system electrically connected to the first battery module and the second battery module in accordance with an exemplary embodiment.
Figure 3 is a front view of the battery connector system in accordance with an exemplary embodiment electrically connected to the first battery module and the second battery module.
Figure 4 is a cross-sectional view of the battery connector system in accordance with an exemplary embodiment electrically connected to the first battery module and the second battery module.
Figure 5 is a front perspective view of the battery connector system electrically connected to the first battery module and the second battery module in accordance with an exemplary embodiment.
Figure 6 is a front view of the battery connector system in accordance with an exemplary embodiment electrically connected to the first battery module and the second battery module.
Figure 7 is a cross-sectional view of the battery connector system in accordance with an exemplary embodiment electrically connected to the first battery module and the second battery module.
Figure 8 is a bottom perspective view of the battery connector system electrically connected to the first battery module and the second battery module in accordance with an exemplary embodiment.
Figure 9 is a bottom perspective view of a portion of the battery connector system in accordance with an exemplary embodiment showing the first battery connector coupled to the first battery module and the second battery connector coupled to the second battery module.
Figure 10 is a top perspective view of a portion of the battery connector system showing the jumper in accordance with an exemplary embodiment.
Figure 11 is a top perspective view of the battery connector system electrically connected to the first battery module and the second battery module in accordance with an exemplary embodiment.
Figure 12 is a top perspective view of a portion of the battery connector system in accordance with an exemplary embodiment showing the first battery connector coupled to the first battery module and showing a portion of the jumper.
Figure 13 is a top perspective view of a portion of the battery connector system in accordance with an exemplary embodiment showing the second battery connector coupled to the second battery module and showing a portion of the jumper.
Figure 14 is a side view of the battery connector system electrically connected to the first battery module and the second battery module in accordance with an exemplary embodiment in an umated state.
Figure 15 is a side view of the battery connector system electrically connected to the first battery module and the second battery module in accordance with an exemplary embodiment in a mated state.
Figure 16 is a side view of the battery connector system electrically connected to the first battery module and the second battery module in accordance with an exemplary embodiment in an umated state.
Figure 17 is a side view of the battery connector system electrically connected to the first battery module and the second battery module in accordance with an exemplary embodiment in a mated state.
Figure 18 is a side view of the battery connector system electrically connected to the first battery module and the second battery module in accordance with an exemplary embodiment in an umated state.
Figure 19 is an exploded view of a portion of the battery connector system showing the jumper in accordance with an exemplary embodiment.

In one embodiment, a battery connector assembly is provided and includes a first battery connector having a first battery contact. The first battery contact has a first separable mating interface. The first battery contact is electrically connected to a first battery terminal of a first battery module. The battery connector assembly includes a second battery connector having a second battery contact. The second battery contact has a second separable mating interface. The second battery contact is electrically connected to a second battery terminal of a second battery module. The battery connector assembly includes a jumper that electrically connects the first battery connector and the second battery connector. The jumper includes a jumper conductor that has a first end and a second end. The first end of the jumper conductor is electrically connected to the first battery contact. The second end of the jumper conductor is electrically connected to the second battery contact.

In another embodiment, a battery connector assembly is provided and includes a first battery connector having a first connector housing holding a first battery contact in a first cavity. The first battery contact has a first separable mating interface for mating with a first battery terminal of a first battery module. The battery connector assembly includes a second battery connector having a second connector housing holding a second battery contact in a second cavity. The second battery contact has a second separable mating interface for mating with a second battery terminal of a second battery. The battery connector assembly includes a jumper electrically connecting the first battery connector and the second battery connector. The jumper includes a jumper conductor has a first end and a second end. The first end of the jumper conductor is terminated to the first battery contact. The second end of the jumper conductor is terminated to the second battery contact. The jumper conductor is flexible between the first end and the second end.

In a further embodiment, battery connector system is provided and includes a first battery module having a first battery terminal. The battery connector system includes a second battery module having a second battery terminal. The battery connector assembly includes a battery connector assembly electrically connecting the first battery and the second battery. The battery connector assembly includes a first battery connector, a second battery connector, and a jumper that electrically connects the first battery connector and the second battery connector. The first battery connector includes a first battery contact that has a first separable mating interface. The first battery contact is electrically connected to the first battery terminal of the first battery. The second battery connector includes a second battery contact that has a second separable mating interface. The second battery contact is electrically connected to the second battery terminal of the second battery. The jumper includes a jumper conductor that has a first end and a second end. The first end of the jumper conductor is electrically connected to the first battery contact. The second end of the jumper conductor is electrically connected to the second battery contact.

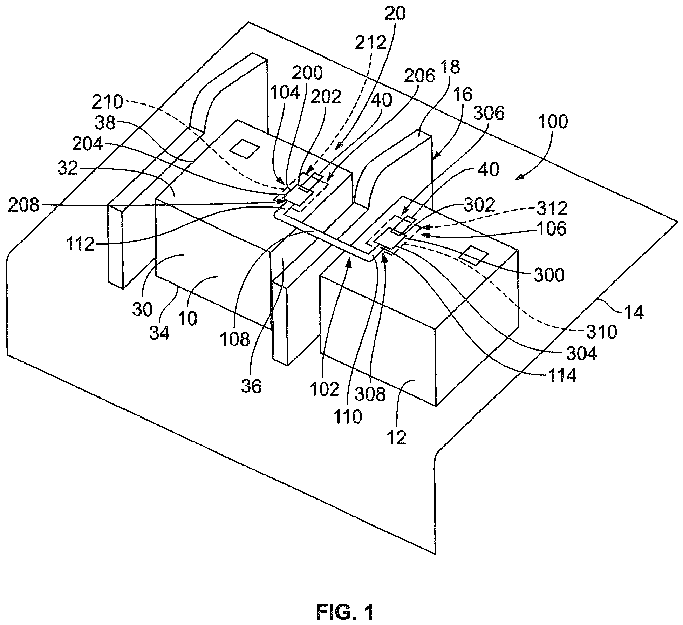

Figure 1 is a schematic view of a battery connector system 100 in accordance with an exemplary embodiment. The battery connector system 100 is used to electrically connect a first battery module 10 and a second battery module 12. The battery connector system 100 is used to connect the first and second battery modules 10, 12 in series or in parallel. In an exemplary embodiment, the first battery module 10 is a first electric vertical takeoff and landing (eVTOL) battery and the second battery module 12 is a second eVTOL battery used in a vehicle 14, such as an aircraft, to operate one or more systems of the vehicle 14 to perform one or more tasks. For example, the first and second battery modules 10, 12 may power motors that operate propellers of the vehicle 14 during takeoff, landing, hovering, and flight. The first and second battery modules 10, 12 may be used in other types of vehicles 14 for controlling other systems of the vehicle 14.

In an exemplary embodiment, the vehicle 14 includes a chassis 16 having frame members 18 that provide a support structure of the vehicle 14. For example, the frame members 18 may be ribs, spars, headers, or other support structures of the vehicle 14. The chassis 16 includes one or more compartments 20 that receive the battery modules 10, 12. For example, the vehicle 14 may include separate compartments 20 that hold the respective battery modules 10, 12. One of the frame members 18 may be located between the compartments 20. The battery connector system 100 may span across or through the frame members 18 to electrically connect the first and second battery modules 10, 12. Optionally, the vehicle 14 may include additional battery modules, which may be connected in series with the first and second battery modules 10, 12 using the battery connector system 100.

In an exemplary embodiment, the battery connector system 100 includes a battery connector assembly 102 electrically connecting the first battery module 10 and the second battery module 12. The battery connector assembly 102 includes a first battery connector 104 coupled to the first battery module 10 and a second battery connector 106 coupled to the second battery module 12. In an exemplary embodiment, the battery connector assembly 102 includes a jumper 108 electrically connecting the first battery connector 104 and the second battery connector 106.

In an exemplary embodiment, the jumper 108 includes a jumper conductor 110 extending between a first end 112 and a second end 114. The first end 112 of the jumper conductor 110 is electrically connected to the first battery connector 104. The second end 114 of the jumper conductor 110 is electrically connected to the second battery connector 106. In an exemplary embodiment, the jumper 108 is flexible to accommodate relative movement between the first battery connector 104 in the second battery connector 106. The jumper 108 is flexible to accommodate relative movement between the first battery module 10 and the second battery module 12. However, in alternative embodiments, the jumper 108 is rigid but the first battery connector 104 and/or the second battery connector 106 is flexible to accommodate relative movement between the first battery module 10 and the second battery module 12. The flexibility of the battery connector assembly 102 accommodates vibration or shock to the battery connector system 100, such as vibration or shock experienced by the vehicle 14 and/or the chassis 16. The flexibility of the battery connector assembly 102 accommodates positioning tolerance between the first battery module 10 and the second battery module 12 within the respective compartments 20.

In an exemplary embodiment, the first and second battery modules 10, 12 may be similar or identical and like components may be identified herein using like reference numerals. The battery module 10 includes a battery module housing 30 housing the battery and/or battery cells. The battery module housing 30 has a top 32 and a bottom 34. The battery module housing 30 extends between opposite sides 36, 38. The battery module 10 includes battery terminals 40. For example, the battery module 10 may include two battery terminals 40, such as a positive battery terminal and a negative battery terminal. In various embodiments, the battery terminals 40 are provided at the top 32. However, in alternative embodiments, the battery terminals 40 may be provided at the bottom 34. The battery terminals 40 may be provided proximate to the sides 36, 38. The battery connector assembly 102 is electrically connected between corresponding battery terminals 40 of the first and second battery modules 10, 12. The battery connector assembly 102 may be permanently coupled to the corresponding battery terminals 40, such as using threaded connections (for example, threaded nuts and ring terminals) or welded connections. Alternatively, the battery connector assembly 102 may be removably coupled to the corresponding battery terminals 40, such as using compression contacts, spring contacts, sliding contacts, and the like.

In an exemplary embodiment, the first battery connector 104 includes a first battery contact 200. The first battery contact 200 includes a mating end 202 and a terminating end 204. The terminating end 204 is configured to be electrically connected to the battery terminal 40 of the first battery module 10. The mating end 202 is configured to be electrically connected to the first end 112 of the jumper conductor 110. In various embodiments, the mating end 202 and/or the terminating end 204 may include a separable mating interface 206 and/or 208, respectively. The first battery contact 200 is separable from the jumper conductor 110 and/or the battery terminal 40 at the corresponding separable mating interface 206 and/or 208. For example, the separable mating interface 206, 208 may include a spring contact, a sliding contact, a spring compression contact, or other separable type of contact. In other embodiments, the mating end 202 and/or the terminating end 204 may be a permanent connection to the jumper conductor 110 and/or the battery terminal 40. For example, the permanent connection may be a crimp contact, a weld contact, a threaded compression contact, and the like.

In various embodiments, the first battery connector 104 includes a first connector housing 210 that holds the first battery contact 200. The first battery contact 200 may be held in a cavity 212 of the first connector housing 210. The jumper 108 may extend into the first connector housing 210 to electrically connect the jumper conductor 110 to the first battery contact 200. The first connector housing 210 may be coupled directly to the first battery module 10, such as using fasteners, clips, latches, and the like. In various embodiments, the first connector housing 210 includes a fire resistant barrier surrounding the first battery contact 200. For example, the first connector housing may be manufactured from a thermoset plastic material. In other various embodiments, the first connector housing 210 may have a fire coating on one or more surfaces of the first connector housing 210. In various embodiments, the first connector housing 210 may be a sealed housing configured to provide a sealed environment for the first battery contact 200.

In an exemplary embodiment, the second battery connector 106 includes a second battery contact 300. The second battery contact 300 includes a mating end 302 and a terminating end 304. The terminating end 304 is configured to be electrically connected to the battery terminal 40 of the second battery module 12. The mating end 302 is configured to be electrically connected to the second end 114 of the jumper conductor 110. In various embodiments, the mating end 302 and/or the terminating end 304 may include a separable mating interface 306 and/or 308, respectively. The second battery contact 300 is separable from the jumper conductor 110 and/or the battery terminal 40 at the corresponding separable mating interface 306 and/or 308. For example, the separable mating interface 306, 308 may include a spring contact, a sliding contact, a spring compression contact, or other separable type of contact. In other embodiments, the mating end 302 and/or the terminating end 304 may be a permanent connection to the jumper conductor 110 and/or the battery terminal 40. For example, the permanent connection may be a crimp contact, a weld contact, a threaded compression contact, and the like.

In various embodiments, the second battery connector 106 includes a second connector housing 310 that holds the second battery contact 300. The second battery contact 300 may be held in a cavity 312 of the second connector housing 310. The jumper 108 may extend into the second connector housing 310 to electrically connect the jumper conductor 110 to the second battery contact 300. The second connector housing 310 may be coupled directly to the second battery module 12, such as using fasteners, clips, latches, and the like. In various embodiments, the second connector housing 310 includes a fire resistant barrier surrounding the second battery contact 300. For example, the second connector housing may be manufactured from a thermoset plastic material. In other various embodiments, the second connector housing 310 may have a fire coating on one or more surfaces of the second connector housing 310. In various embodiments, the second connector housing 310 may be a sealed housing configured to provide a sealed environment for the second battery contact 300.

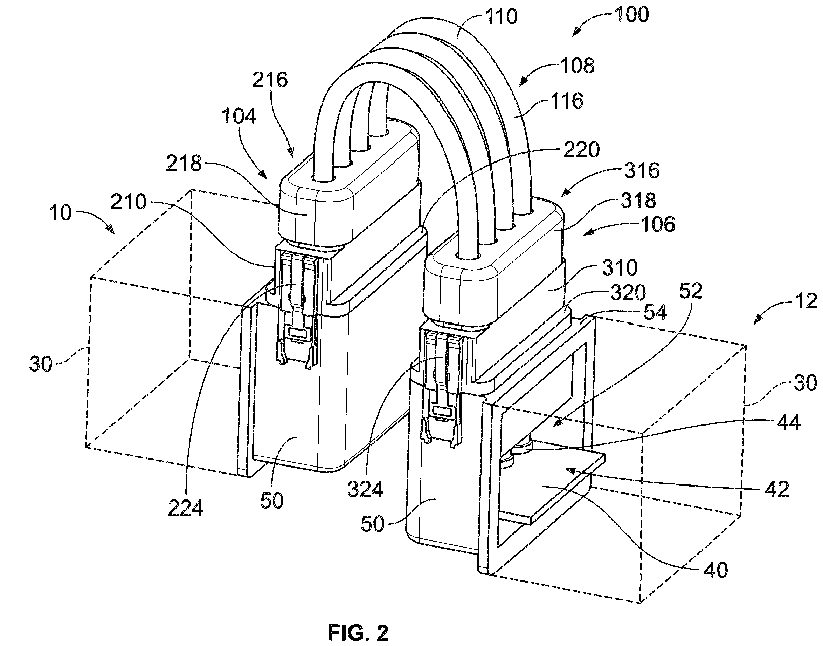

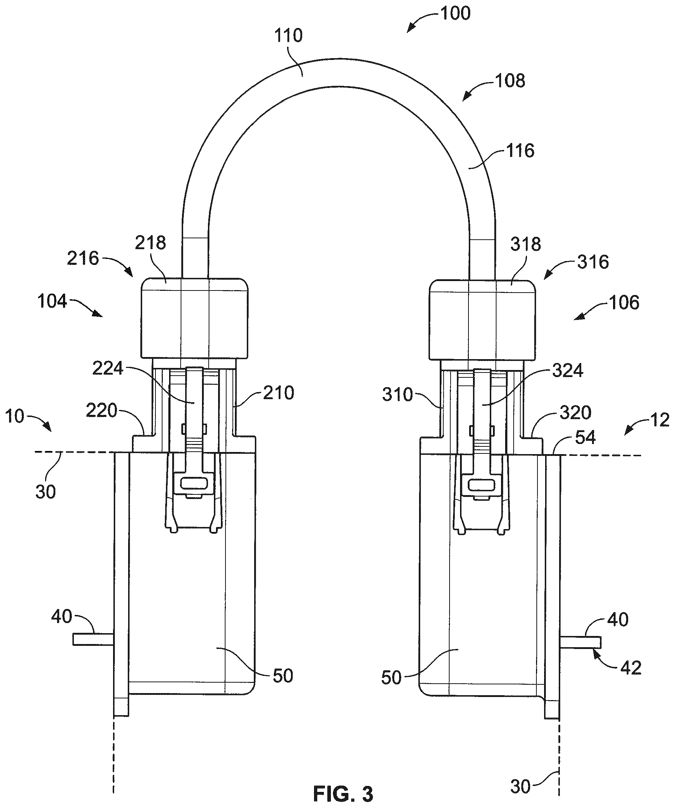

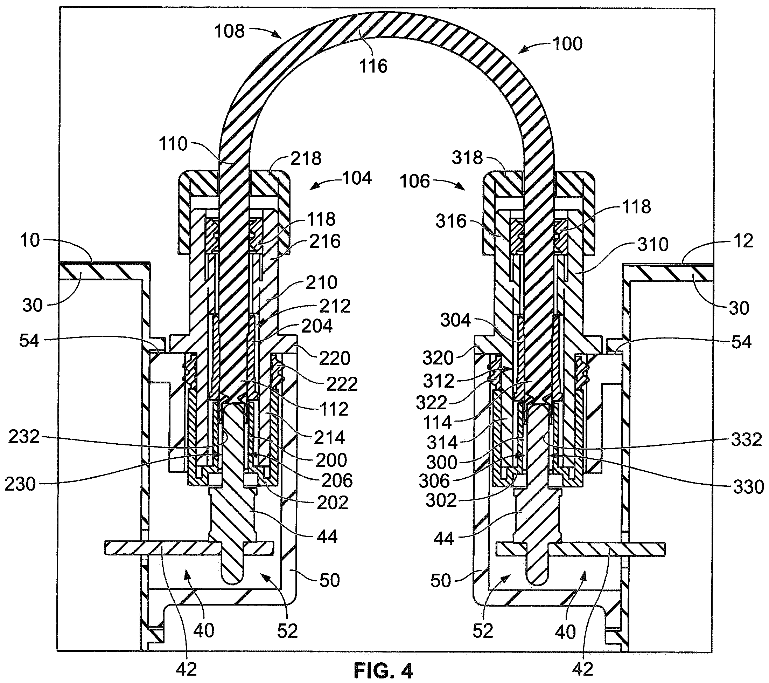

Figure 2 is a front perspective view of the battery connector system 100 electrically connected to the first battery module 10 and the second battery module 12 in accordance with an exemplary embodiment. Figure 3 is a front view of the battery connector system 100 in accordance with an exemplary embodiment electrically connected to the first battery module 10 and the second battery module 12. Figure 4 is a cross-sectional view of the battery connector system 100 in accordance with an exemplary embodiment electrically connected to the first battery module 10 and the second battery module 12.

In an exemplary embodiment, each battery module 10, 12 includes a shroud 50 extending from the battery module housing 30. In various embodiments, the shroud 50 is separately formed from the battery module housing 30 and coupled thereto. In alternative embodiments, the shroud 50 may be integral with the battery module housing 30, such as being co-molded with the battery module housing 30. The shroud 50 covers the battery terminal 40. The shroud 50 forms a cavity 52. The battery terminal 40 extends into the cavity 52. The shroud 50 includes a mounting surface 54 for receiving the corresponding battery connector 104, 106. For example, the battery connector 104, 106 may be coupled to the mounting surface 54 and plug into the cavity 52. The battery connector 104, 106 extends into the cavity 52 to interface with the battery terminal 40.

In the illustrated embodiment, the battery terminal 40 includes a busbar 42 and one or more the terminating posts 44 extending from the busbar 42. The busbar 42 may be a metal plate, such as a copper or aluminum plate. The terminating posts 44 may be press-fit into the busbar 42. The terminating posts 44 may be welded to the busbar 42. In various embodiments, the terminating posts 44 are machined posts. The terminating posts 44 may be generally cylindrical. Other types of terminating posts may be used in alternative embodiments, such as a threaded post. Other types of battery terminals may be used in alternative embodiments.

In the illustrated embodiment, the jumper 108 includes a plurality of the jumper conductors 110. For example, the jumper conductors 110 include cables 116 extending between the first and second battery connectors 104, 106. The cables 116 are flexible. The cables 116 may be preformed into a predetermined shape, such as a U-shape. In the illustrated embodiment, four of the cables 116 are provided. However, greater or fewer cables 116 may be utilized in alternative embodiments, such as to increase or decrease the current carrying capacity between the first and second battery connectors 104, 106.

In an exemplary embodiment, the first connector housing 210 includes a plug end 214 and a cable end 216 opposite the plug end 214. The cables 116 exit the first connector housing 210 at the cable end 216. In an exemplary embodiment, a cable seal or grommet 118 is provided between the cable 116 and the cable end 216 of the first connector housing 210 to provide an environmental seal between the cable 116 and the first connector housing 210. In an exemplary embodiment, a ferrule 218 is provided at the cable end 216 of the first connector housing 210. The ferrule 218 may provide strain relief for the cables 116. The plug end 214 is plugged into the cavity 52 of the shroud 50. In an exemplary embodiment, a flange 220 is provided between the plug end 214 and the cable end 216. The flange 220 is mounted to the mounting surface 54. In an exemplary embodiment, a seal 222 is coupled to the plug end 214 and/or the flange 220 and is configured to seal against the shroud 50. The first connector housing 210 may include multiple components, such as a front housing and the rear housing. In an exemplary embodiment, the first battery connector 104 includes latches 224 configured to be latchably coupled to the shroud 50 and/or the first connector housing 210. The latches 224 are releasable to allow uncoupling and removal of the first battery connector 104. The latches 224 may be released by pinching inward on the latches 224 and/or pulling outward on the latches 224.

The first battery contact 200 is held in the cavity 212 of the first connector housing 210, such as at the plug end 214. The first battery contact 200 is electrically connected to the first end 112 of the jumper conductor 110. For example, the terminating end 204 of the first battery contact 200 may be crimped to the first end 112 of the jumper conductor 110. In an exemplary embodiment, the first battery contact 200 includes a socket 230 at the mating end 202. The socket 230 receives the terminating post 44 of the battery terminal 40. In an exemplary embodiment, the first battery contact 200 includes a plurality of spring fingers 232 at the mating end 202. The spring fingers 232 extend into the socket 230 to interface with the terminating post 44. The first battery contact 200 may be cylindrical or tube-shaped having the spring fingers 232 extending into the hollow bore of the cylindrical first battery contact 200. The spring fingers 232 may be located circumferentially around the socket 230. The spring fingers 232 define the separable mating interface 206. The spring fingers 232 form a sliding connection with the terminating post 44 as the first battery connector 104 is plugged into the cavity 52 of the shroud 50. The spring fingers 232 may be spring biased against the terminating post 44 to maintain a reliable mechanical and electrical connection between the first battery contact 200 and the battery terminal 40.

In an exemplary embodiment, the second connector housing 310 includes a plug end 314 and a cable end 316 opposite the plug end 314. The cables 116 exit the second connector housing 310 at the cable end 316. In an exemplary embodiment, a cable seal or grommet 118 is provided between the cable 116 and the cable end 316 of the second connector housing 310 to provide an environmental seal between the cable 116 and the second connector housing 310. In an exemplary embodiment, a ferrule 318 is provided at the cable end 316 of the second connector housing 310. The ferrule 318 may provide strain relief for the cables 116. The plug end 314 is plugged into the cavity 52 of the shroud 50. In an exemplary embodiment, a flange 320 is provided between the plug end 314 and the cable end 316. The flange 320 is mounted to the mounting surface 54. In an exemplary embodiment, a seal 322 is coupled to the plug end 314 and/or the flange 320 and is configured to seal against the shroud 50. The second connector housing 310 may include multiple components, such as a front housing and the rear housing. In an exemplary embodiment, the second battery connector 106 includes latches 324 configured to be latchably coupled to the shroud 50 and/or the second connector housing 310. The latches 324 are releasable to allow uncoupling and removal of the second battery connector 106. The latches 324 may be released by pinching inward on the latches 324 and/or pulling outward on the latches 324.

The second battery contact 300 is held in the cavity 312 of the second connector housing 310, such as at the plug end 314. The second battery contact 300 is electrically connected to the second end 114 of the jumper conductor 110. For example, the terminating end 304 of the second battery contact 300 may be crimped to the second end 114 of the jumper conductor 110. In an exemplary embodiment, the second battery contact 300 includes a socket 330 at the mating end 302. The socket 330 receives the terminating post 44 of the battery terminal 40. In an exemplary embodiment, the second battery contact 300 includes a plurality of spring fingers 332 at the mating end 302. The spring fingers 332 extend into the socket 330 to interface with the terminating post 44.

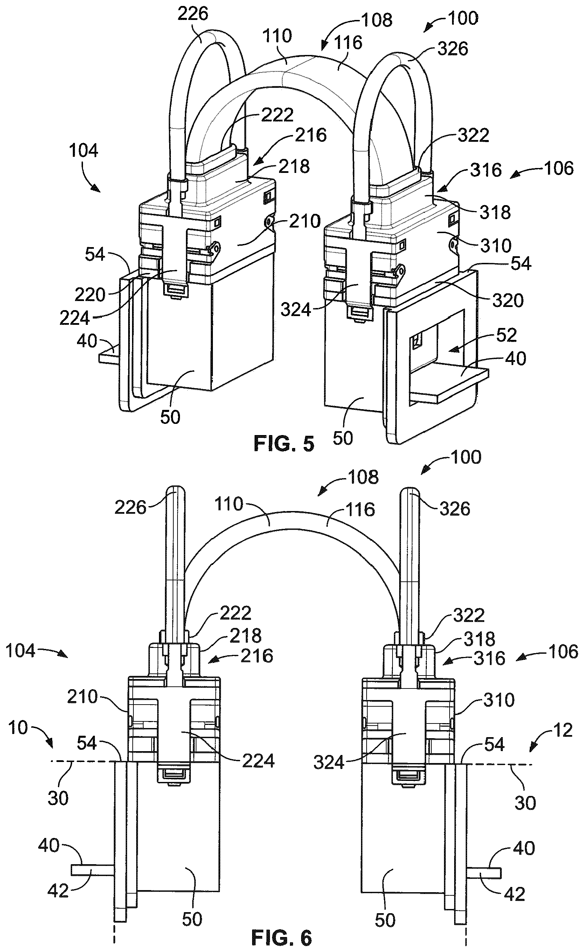

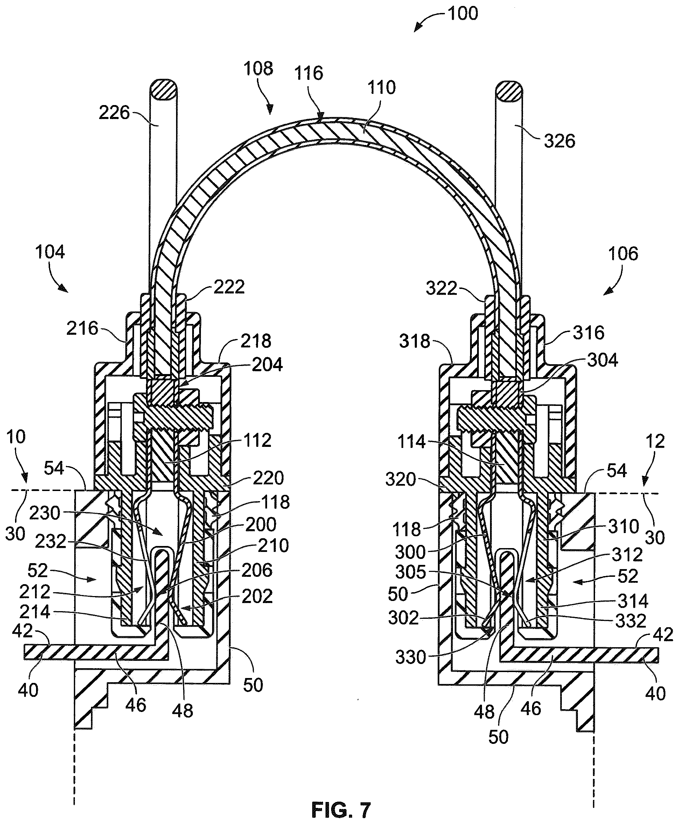

Figure 5 is a front perspective view of the battery connector system 100 electrically connected to the first battery module 10 and the second battery module 12 in accordance with an exemplary embodiment. Figure 6 is a front view of the battery connector system 100 in accordance with an exemplary embodiment electrically connected to the first battery module 10 and the second battery module 12. Figure 7 is a cross-sectional view of the battery connector system 100 in accordance with an exemplary embodiment electrically connected to the first battery module 10 and the second battery module 12.

In an exemplary embodiment, the shroud 50 extends from the battery module housing 30. The shroud 50 covers the battery terminal 40. The battery terminal 40 includes the busbar 42. In the illustrated embodiment, the busbar 42 is L-shaped including a main body 46 and a mating portion 48 extending from the main body 46. The mating portion 48 may be oriented perpendicular to the main body 46. The battery contacts 200, 300 are configured to be mated to the mating portions 48 of the first and second battery terminals 40. The mating portion 48 has a width and a thickness sized for a particular current rating. The current carrying capacity may be increased or decreased by changing the width and/or the thickness. Other types of battery terminals may be used in alternative embodiments.

In the illustrated embodiment, the jumper 108 includes a single jumper conductor 110. For example, the jumper conductor 110 includes a single cable 116 extending between the first and second battery connectors 104, 106. The cable 116 may be a flat flexible cable. The cable 116 may be a braided flat cable. The cable 116 has a width and a thickness sized for a particular current rating. The current carrying capacity may be increased or decreased by changing the width and/or the thickness of the cable. The cable 116 may be preformed into a predetermined shape, such as a U-shape.

In an exemplary embodiment, the first connector housing 210 includes the plug end 214 and the cable end 216 opposite the plug end 214. The cable 116 exits the first connector housing 210 at the cable end 216. In an exemplary embodiment, the cable seal or grommet 118 is provided at the cable exit and circumferentially surrounds the cable 116 to provide an environmental seal between the cable 116 and the first connector housing 210. In an exemplary embodiment, a ferrule 218 is provided at the cable end 216 of the first connector housing 210. The ferrule 218 may provide strain relief for the cable 116. The ferrule 218 covers the components of the first battery connector 104 from the environment.

The plug end 214 is plugged into the cavity 52 of the shroud 50. The flange 220 is mounted to the mounting surface 54. The seal 222 is coupled to the plug end 214 and/or the flange 220 and is configured to seal against the shroud 50. The first connector housing 210 may include multiple components, such as a front housing and the rear housing. In an exemplary embodiment, the first battery connector 104 includes latches 224 configured to be latchably coupled to the shroud 50 and/or the first connector housing 210. The latches 224 are releasable to allow uncoupling and removal of the first battery connector 104. A lanyard 226 may be coupled to the latches 224 to release the latches 224. The latches 226 may be released by pulling upward on the lanyard 226.

The first battery contact 200 is held in the cavity 212 of the first connector housing 210, such as at the plug end 214. The first battery contact 200 is electrically connected to the first end 112 of the jumper conductor 110. For example, the terminating end 204 of the first battery contact 200 may be compression coupled to the first end 112 of the jumper conductor 110 using a threaded fastener and a nut.

In an exemplary embodiment, the socket 230 at the mating end 202 of the first battery contact 200 is elongated to receive the elongated mating portion 48 of the battery terminal 40. In an exemplary embodiment, the first battery contact 200 includes the spring fingers 232 extending along both sides of the mating portion 48. The spring fingers 232 extend into the socket 230 to interface with the mating portion 48. The spring fingers 232 define the separable mating interface 206. The spring fingers 232 form a sliding connection with the mating portion 48 as the first battery connector 104 is plugged into the cavity 52 of the shroud 50. The spring fingers 232 may be spring biased against the mating portion 48 to maintain a reliable mechanical and electrical connection between the first battery contact 200 and the battery terminal 40.

In an exemplary embodiment, the second connector housing 310 includes the plug end 314 and the cable end 316 opposite the plug end 314. The cable 116 exits the second connector housing 310 at the cable end 316. In an exemplary embodiment, the cable seal or grommet 118 is provided at the cable exit and circumferentially surrounds the cable 116 to provide an environmental seal between the cable 116 and the second connector housing 310. In an exemplary embodiment, a ferrule 318 is provided at the cable end 316 of the second connector housing 310. The ferrule 318 may provide strain relief for the cable 116. The ferrule 318 covers the components of the second battery connector 106 from the environment.

The plug end 314 is plugged into the cavity 52 of the shroud 50. The flange 320 is mounted to the mounting surface 54. The seal 322 is coupled to the plug end 314 and/or the flange 320 and is configured to seal against the shroud 50. The second connector housing 310 may include multiple components, such as a front housing and the rear housing. In an exemplary embodiment, the second battery connector 106 includes latches 324 configured to be latchably coupled to the shroud 50 and/or the second connector housing 310. The latches 324 are releasable to allow uncoupling and removal of the second battery connector 106. A lanyard 326 may be coupled to the latches 324 to release the latches 324. The latches 326 may be released by pulling upward on the lanyard 326.

The second battery contact 300 is held in the cavity 312 of the second connector housing 310, such as at the plug end 314. The second battery contact 300 is electrically connected to the second end 114 of the jumper conductor 110. For example, the terminating end 304 of the second battery contact 300 may be compression coupled to the second end 114 of the jumper conductor 110 using a threaded fastener and a nut.

In an exemplary embodiment, the socket 330 at the mating end 302 of the second battery contact 300 is elongated to receive the elongated mating portion 48 of the battery terminal 40. In an exemplary embodiment, the second battery contact 300 includes the spring fingers 332 extending along both sides of the mating portion 48. The spring fingers 332 extend into the socket 330 to interface with the mating portion 48. The spring fingers 332 define the separable mating interface 306. The spring fingers 332 form a sliding connection with the mating portion 48 as the second battery connector 106 is plugged into the cavity 52 of the shroud 50. The spring fingers 332 may be spring biased against the mating portion 48 to maintain a reliable mechanical and electrical connection between the second battery contact 300 and the battery terminal 40.

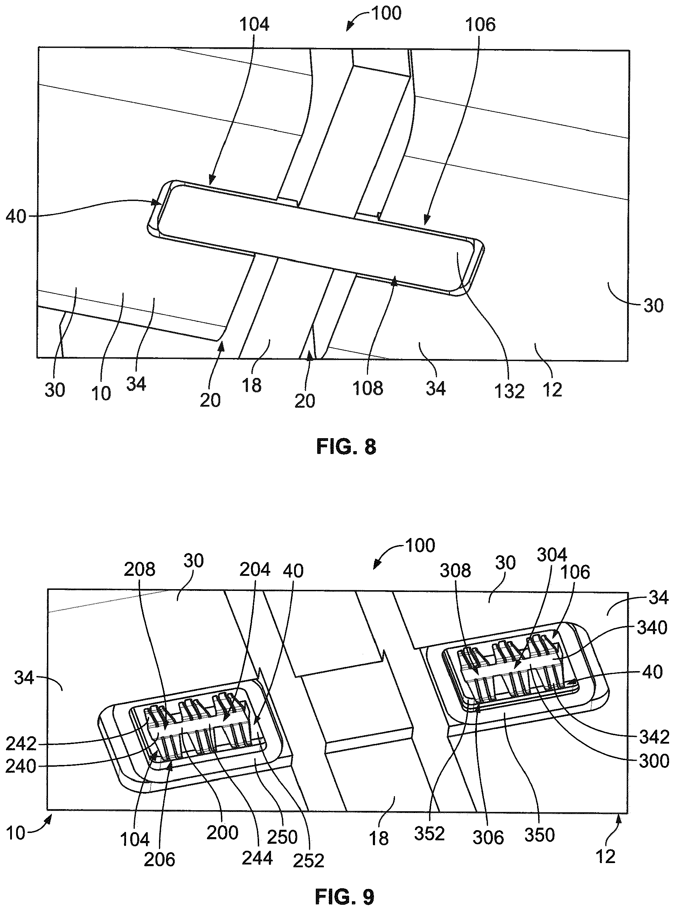

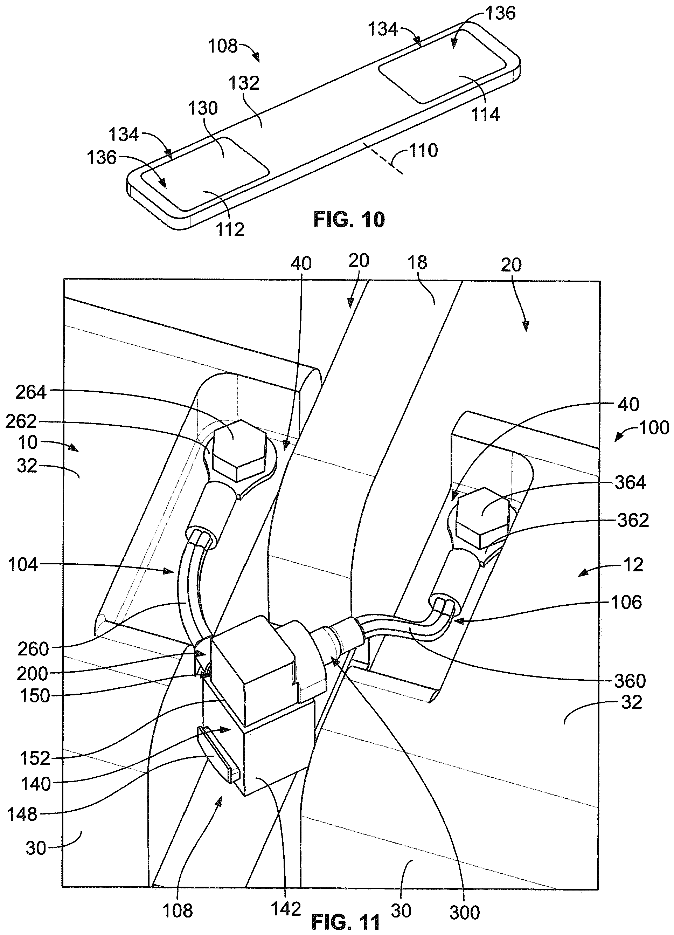

Figure 8 is a bottom perspective view of the battery connector system 100 electrically connected to the first battery module 10 and the second battery module 12 in accordance with an exemplary embodiment. Figure 9 is a bottom perspective view of a portion of the battery connector system 100 in accordance with an exemplary embodiment showing the first battery connector 104 coupled to the first battery module 10 and the second batter connector 106 coupled to the second battery module 12. Figure 10 is a top perspective view of a portion of the battery connector system 100 showing the jumper 108 in accordance with an exemplary embodiment.

In an exemplary embodiment, the jumper 108 includes a busbar 130 forming the jumper conductor 110 and a housing 132 holding the busbar 130. The busbar 130 may be a metal bar or plate, such as a copper or aluminum plate. The busbar 130 may be planar. In the illustrated embodiment, the busbar 130 is rectangular; however, the busbar 130 may have other shapes in alternative embodiments. The housing 132 may be a molded part that is preformed and the busbar 130 is loaded into the housing 132. In other embodiments, the housing 132 may be formed on the busbar 130, such as being molded in place around the busbar 130. The housing 132 may be a hot melt formed around the busbar 130. The housing 132 may be an insulative coating applied to the busbar 130. The housing 132 includes openings 134 that expose mating regions 136 of the busbar 130 the mating regions 136 are provided at the first end 112 and the second end 114.

In an exemplary embodiment, the busbar 130 of the jumper 108 is coupled to the bottoms 34 of the battery module housings 30 of the first and second battery modules 10, 12. For example, when the battery modules 10, 12 are loaded into the compartments 20, the battery modules 10, 12 may seat on the busbar 130. In an exemplary embodiment, the busbar 130 is coupled to the frame member 18 between the compartments 20 to interface with the first and second battery modules 10, 12 when the battery modules 10, 12 are loaded into the respective compartments 20. The mating regions 136 of the busbar 130 face upward to interface with the first and second battery connectors 104, 106 at the bottoms 34 of the battery module housings 30.

In an exemplary embodiment, the first and second battery connectors 104, 106 are coupled to the bottoms 34 of the battery module housings 30 of the first and second battery modules 10, 12, respectively. The battery terminals 40 of the battery modules 10, 12 are located at the bottoms 34 of the battery module housings 30. The first battery contact 200 is coupled to the battery terminal 40 at the bottom 34 of the first battery module 10. The second battery contact 300 is coupled to the battery terminal 40 at the bottom 34 of the second battery module 12. The battery contacts 200, 300 are mated to the busbar 130 with the battery modules 10, 12 as the battery modules 10, 12 are loaded into the compartments 20. The battery contacts 200, 300 are removable from the compartments 20 with the battery modules 10, 12.

The first battery contact 200 includes a main body 240 and spring fingers 242 extending from the main body 240. In the illustrated embodiment, the main body 240 includes an elongated rail 244. The main body 240 defines the terminating end 204 configured to be coupled to the busbar 130 of the jumper 108. The rail 244 is elongated to provide a large surface area for mating with the busbar 130. In the illustrated embodiment, rail 244 defines the separable mating interface 208 for mating with the mating region 136 of the busbar 130. The busbar 130 is separable from the rail 244, such as when the battery module 10 is removed from the compartments 20. The spring fingers 242 extend from the main body 240 to interface with the battery terminal 40. In an exemplary embodiment, the spring fingers 242 define the separable mating interface 206 for the first battery contact 200. The spring fingers 242 are separable from the battery terminal 40. For example, the spring fingers 242 form a sliding connection with the battery terminal 40 when mated with the busbar 130. The spring fingers 242 are compressible and flexible. The spring fingers 242 may hold the main body 240 at an extended position to interface with the busbar 130. When the main body 240 engages the busbar 130 the spring fingers 242 are deflected and slide along the battery terminal 40. In an exemplary embodiment, the spring fingers 242 extend from both sides of the main body 240. However, the spring fingers 242 may extend from one side of the main body 240 in alternative embodiments. In an exemplary embodiment, a plurality of the spring fingers 242 are provided to provide multiple points of contact with the battery terminal 40.

In an exemplary embodiment, the first battery connector 104 includes a gasket 250 surrounding a holder 252. The holder 252 may be separate and discrete from the battery module housing 30 and coupled thereto. In other various embodiments, the holder 252 may be defined by the battery module housing 30, such as being molded with the bottom 34 of the battery module housing 30. The holder 252 may hold the gasket 250 and/or the first battery contact 200. The gasket 250 is configured to be sealed against the holder 252 and/or the battery module housing 30 and/or the busbar 130. The gasket 250 provides a sealed interface around the first battery contact 200. For example, the gasket 250 extends entirely circumferentially around the first battery contact 200.

The second battery contact 300 includes a main body 340 and spring fingers 342 extending from the main body 340. In the illustrated embodiment, the main body 340 includes an elongated rail 344. The main body 340 defines the terminating end 304 configured to be coupled to the busbar 130 of the jumper 108. The rail 344 is elongated to provide a large surface area for mating with the busbar 130. In the illustrated embodiment, rail 344 defines the separable mating interface 308 for mating with the mating region 136 of the busbar 130. The busbar 130 is separable from the rail 344, such as when the battery module 10 is removed from the compartments 20. The spring fingers 342 extend from the main body 340 to interface with the battery terminal 40. In an exemplary embodiment, the spring fingers 342 define the separable mating interface 306 for the second battery contact 300. The spring fingers 342 are separable from the battery terminal 40. For example, the spring fingers 342 form a sliding connection with the battery terminal 40 when mated with the busbar 130. The spring fingers 342 are compressible and flexible. The spring fingers 342 may hold the main body 340 at an extended position to interface with the busbar 130. When the main body 340 engages the busbar 130 the spring fingers 342 are deflected and slide along the battery terminal 40. In an exemplary embodiment, the spring fingers 342 extend from both sides of the main body 340. However, the spring fingers 342 may extend from one side of the main body 340 in alternative embodiments. In an exemplary embodiment, a plurality of the spring fingers 342 are provided to provide multiple points of contact with the battery terminal 40.

In an exemplary embodiment, the second battery connector 106 includes a gasket 350 surrounding a holder 352. The holder 352 may be separate and discrete from the battery module housing 30 and coupled thereto. In other various embodiments, the holder 352 may be defined by the battery module housing 30, such as being molded with the bottom 34 of the battery module housing 30. The holder 352 may hold the gasket 350 and/or the second battery contact 300. The gasket 350 is configured to be sealed against the holder 352 and/or the battery module housing 30 and/or the busbar 130. The gasket 350 provides a sealed interface around the second battery contact 300. For example, the gasket 350 extends entirely circumferentially around the second battery contact 300.

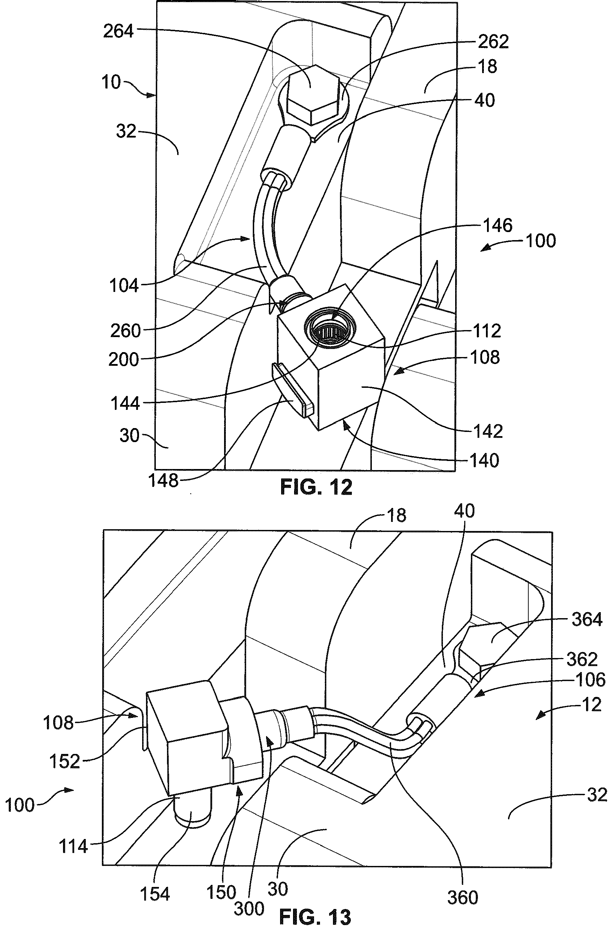

Figure 11 is a top perspective view of the battery connector system 100 electrically connected to the first battery module 10 and the second battery module 12 in accordance with an exemplary embodiment. Figure 12 is a top perspective view of a portion of the battery connector system 100 in accordance with an exemplary embodiment showing the first battery connector 104 coupled to the first battery module 10 and showing a portion of the jumper 108. Figure 13 is a top perspective view of a portion of the battery connector system 100 in accordance with an exemplary embodiment showing the second battery connector 106 coupled to the second battery module 12 and showing a portion of the jumper 108.

In an exemplary embodiment, the jumper 108 is a multi-piece component including a lower jumper connector 140 and an upper jumper connector 150. The upper jumper connector 150 is coupled to the lower jumper connector 140 at a separable mating interface. The lower jumper connector 140 includes a lower jumper housing 142 and a lower jumper contact 144. In the illustrated embodiment, the lower jumper contact 144 is a socket contact received in a cavity 146 of the lower jumper housing 142. The lower jumper contact 144 may be a cylindrical contact having spring beams defining a separable mating interface. Other types of contacts may be used in alternative embodiments. In an exemplary embodiment, the lower jumper connector 140 includes a latch 148 configured to latchably couple the upper jumper connector 150 to the lower jumper connector 140. In various embodiments, the lower jumper housing 142 may be mounted to the frame member 18 between the compartments 20. For example, the lower jumper housing 142 may be secured to the frame member 18 using adhesive, fasteners, clips, latches, or other securing feature.

The upper jumper connector 150 includes an upper jumper housing 152 and an upper jumper contact 154. In the illustrated embodiment, the upper jumper contact 154 is a pin contact configured be received in the cavity 146 of the lower jumper housing 142 to electrically connect the upper jumper contact 154 with the lower jumper contact 144. In an exemplary embodiment, the upper jumper contact 154 is coupled to the lower jumper contact 144 at a separable mating interface. The upper jumper contact 154 extends from the upper jumper housing 152. Other types of contacts may be used in alternative embodiments. In an exemplary embodiment, the latch 148 is configured to be latchably coupled to the upper jumper contact 154 to retain the upper jumper contact 154 in the cavity 146. The upper jumper housing 152 may be coupled to the lower jumper housing 142.

In an exemplary embodiment, the first and second battery connectors 104, 106 are coupled to the tops 32 of the battery module housings 30 of the first and second battery modules 10, 12, respectively. The battery terminals 40 of the battery modules 10, 12 are located at the tops 32 of the battery module housings 30. The first battery contact 200 is coupled to the battery terminal 40 at the top 32 of the first battery module 10. The second battery contact 300 is coupled to the battery terminal 40 at the top 32 of the second battery module 12. The lower and upper jumper connectors 140, 150 are configured to be mated after the battery modules 10, 12 are loaded into the compartments 20 and the first and second battery connectors 104, 106 are coupled to the first and second battery modules 10, 12.

The first battery connector 104 includes the first battery contact 200, a cable 260 and a ring terminal 262 configured to be coupled to the battery terminal 40 using a threaded fastener 264. The cable 260 is flexible between the first battery contact 200 and the ring terminal 262. The ring terminal 262 may be crimped to the cable 260. The first battery contact 200 may be crimped to the cable 260. The first battery contact 200 is configured to be electrically connected to the lower jumper contact 144 at the first end 112 of the jumper 108. For example, the first battery contact 200 may be welded or crimped to the lower jumper contact 144. In other various embodiments, the first battery contact 200 may be coupled to the lower jumper contact 144 using spring fingers or other types of compressible connections to form a separable mating interface with the lower jumper contact 144. In alternative embodiments, the first battery contact 200 may be integral with the lower jumper contact 144, such as being stamped and formed with the lower jumper contact 144.

The second battery connector 106 includes the second battery contact 300, a cable 360 and a ring terminal 362 configured to be coupled to the battery terminal 40 using a threaded fastener 364. The cable 360 is flexible between the second battery contact 300 and the ring terminal 362. The ring terminal 362 may be crimped to the cable 360. The second battery contact 300 may be crimped to the cable 360. The second battery contact 300 is configured to be electrically connected to the lower jumper contact 144 at the second end 114 of the jumper 108. For example, the second battery contact 300 may be welded or crimped to the lower jumper contact 144. In other various embodiments, the second battery contact 300 may be coupled to the lower jumper contact 144 using spring fingers or other types of compressible connections to form a separable mating interface with the lower jumper contact 144. In alternative embodiments, the second battery contact 300 may be integral with the lower jumper contact 144, such as being stamped and formed with the lower jumper contact 144.

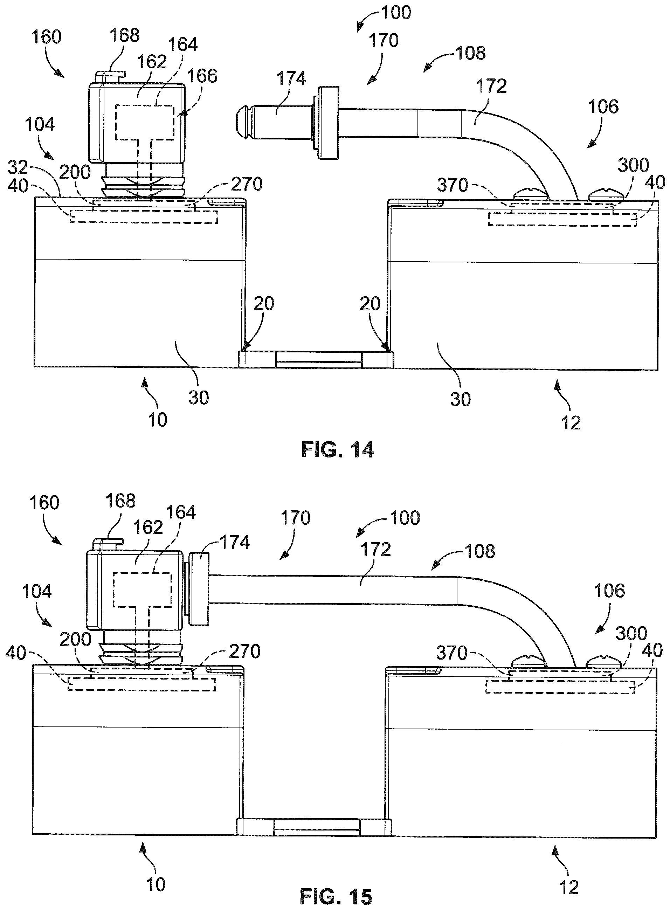

Figure 14 is a side view of the battery connector system 100 electrically connected to the first battery module 10 and the second battery module 12 in accordance with an exemplary embodiment in an umated state. Figure 15 is a side view of the battery connector system 100 electrically connected to the first battery module 10 and the second battery module 12 in accordance with an exemplary embodiment in a mated state.

In an exemplary embodiment, the jumper 108 is a multi-piece component including a fixed jumper connector 160 and an flexible jumper connector 170. The flexible jumper connector 170 is coupled to the fixed jumper connector 160 at a separable mating interface. The fixed jumper connector 160 includes a fixed jumper housing 162 and a fixed jumper contact 164 (shown in phantom). In the illustrated embodiment, the fixed jumper contact 164 is a socket contact. Other types of contacts may be used in alternative embodiments. In an exemplary embodiment, the fixed jumper connector 160 includes a latch 168 configured to latchably couple the flexible jumper connector 170 to the fixed jumper connector 160. In various embodiments, the fixed jumper housing 162 may be mounted to the first battery module 10. For example, the fixed jumper housing 162 may be secured to the battery module housing 30, such as using a threaded connection or using adhesive, fasteners, clips, latches, or other securing feature.

The flexible jumper connector 170 includes a flexible jumper cable 172 and a flexible jumper contact 174 terminated to the end of the flexible jumper cable 172. In the illustrated embodiment, the flexible jumper contact 174 is a pin contact configured be received in the fixed jumper housing 162 to electrically connect the flexible jumper contact 174 with the fixed jumper contact 164. In an exemplary embodiment, the flexible jumper contact 174 is coupled to the fixed jumper contact 164 at a separable mating interface. Other types of contacts may be used in alternative embodiments. In an exemplary embodiment, the latch 168 is configured to be latchably coupled to the flexible jumper contact 174 to retain the flexible jumper contact 174 in the cavity 166.

In an exemplary embodiment, the first and second battery connectors 104, 106 are coupled to the tops 32 of the battery module housings 30 of the first and second battery modules 10, 12, respectively. The battery terminals 40 of the battery modules 10, 12 are located at the tops 32 of the battery module housings 30. The first battery contact 200 (shown in phantom) is coupled to the battery terminal 40 at the top 32 of the first battery module 10. In the illustrated embodiment, the first battery contact 200 includes a weld pad 270 configured to be welded to the battery terminal 40 and/or configured to be welded to the fixed jumper contact 164. Other types of contacts may be provided in alternative embodiments, such as pins, sockets, posts, spring contacts, blade contacts, and the like. The second battery contact 300 (shown in phantom) is coupled to the battery terminal 40 at the top 32 of the second battery module 12. In the illustrated embodiment, the second battery contact 300 includes a weld pad 370 configured to be welded to the battery terminal 40 and/or configured to be welded to the flexible jumper cable 172. Other types of contacts may be provided in alternative embodiments, such as crimp contacts, pins, sockets, posts, spring contacts, blade contacts, and the like. The fixed and flexible jumper connectors 160, 170 are configured to be mated after the battery modules 10, 12 are loaded into the compartments 20.

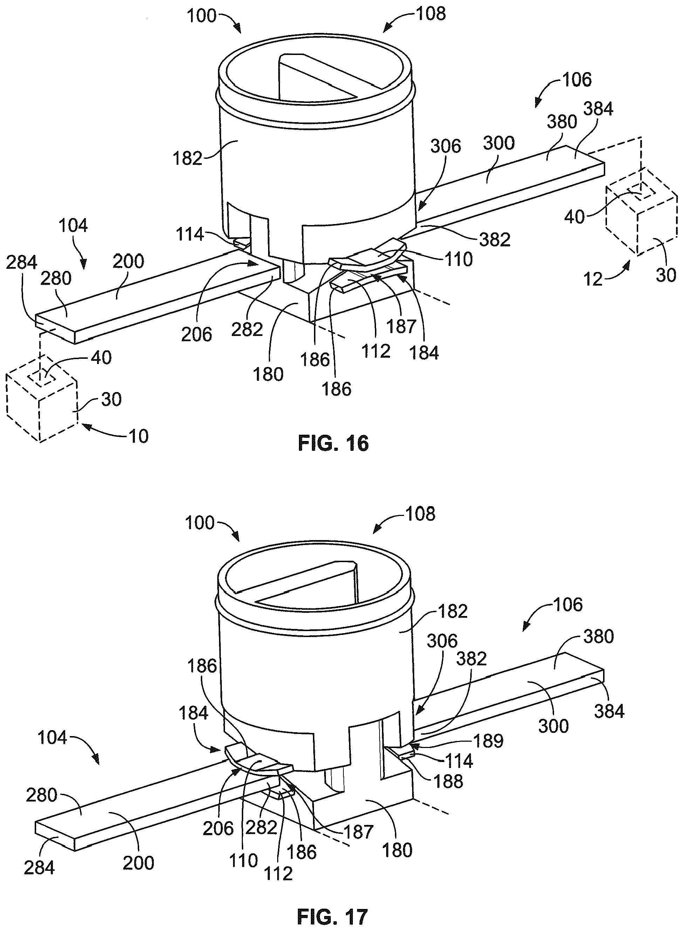

Figure 16 is a side view of the battery connector system 100 electrically connected to the first battery module 10 and the second battery module 12 in accordance with an exemplary embodiment in an umated state. Figure 17 is a side view of the battery connector system 100 electrically connected to the first battery module 10 and the second battery module 12 in accordance with an exemplary embodiment in a mated state.

In an exemplary embodiment, the jumper 108 includes a base 180 and an actuator 182 rotatably coupled to the base 180. The actuator 182 holds a jumper contact 184. The jumper contact 184 is rotatable with the actuator 182 between an unmated position (Figure 16) and a mated position (Figure 17). The jumper contact 184 defines the jumper conductor 110. The jumper contact 184 includes first contact beams 186 at the first end 112 and second contact beams 188 at the second end 114. A first slot 187 is formed between the first contact beams 186 configured to receive the first battery contact 200. A second slot 189 is formed between the second contact beams 188 configured to receive the second battery contact 300. In the illustrated embodiment, the actuator 182 is rotated approximately 90° between the unmated position and the mated position. The first contact beams 186 engage the first battery contact 200 in the mated position. The second contact beams 188 engage the second battery contact 300 in the mated position. The jumper contact 184 electrically connects the first and second battery contacts 200, 300 in the mated position.

In an exemplary embodiment, the first battery contact 200 includes a busbar 280 extending between a first end 282 and a second end 284. The first end 282 is configured to be coupled to the jumper contact 184. For example, the first end 282 is received in the first slot 187 between the first contact beams 186. The separable mating interface 206 is formed between the first end 282 of the busbar 280 and the first contact beams 186. The second end 284 is configured to be electrically connected to the battery terminal 40. The second end 284 may be welded to the battery terminal 40; however, the second end 284 may be connected by other means in alternative embodiments. In various embodiments, a connector housing may be provided holding the busbar 280. The connector housing may be a molded part or may be defined by an overmold, hot melt, or coating applied to the busbar 280.

In an exemplary embodiment, the second battery contact 300 includes a busbar 380 extending between a second end 382 and a second end 384. The second end 382 is configured to be coupled to the jumper contact 184. For example, the second end 382 is received in the second slot 189 between the second contact beams 188. The separable mating interface 306 is formed between the second end 382 of the busbar 380 and the second contact beams 188. The second end 384 is configured to be electrically connected to the battery terminal 40. The second end 384 may be welded to the battery terminal 40; however, the second end 384 may be connected by other means in alternative embodiments. In various embodiments, a connector housing may be provided holding the busbar 380. The connector housing may be a molded part or may be defined by an overmold, hot melt, or coating applied to the busbar 380.

In an exemplary embodiment, the first and second battery connectors 104, 106 may be coupled to the tops of the battery module housings 30 of the first and second battery modules 10, 12, respectively. For example, the battery terminals 40 of the battery modules 10, 12 are located at the tops of the battery module housings 30. In alternative embodiments, the first and second battery connectors 104, 106 may be coupled to the bottoms of the battery module housings 30 of the first and second battery modules 10, 12, respectively. For example, the battery terminals 40 of the battery modules 10, 12 may be located at the bottoms of the battery module housings 30.

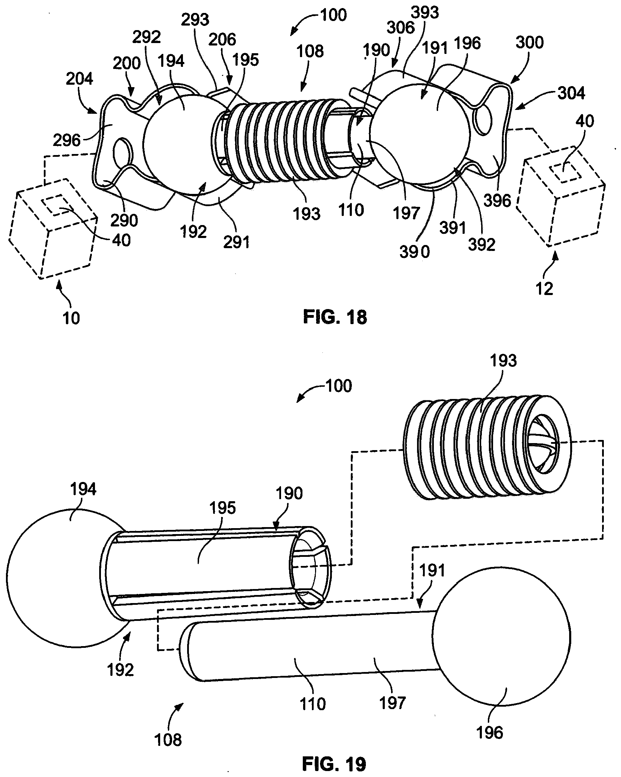

Figure 18 is a side view of the battery connector system 100 electrically connected to the first battery module 10 and the second battery module 12 in accordance with an exemplary embodiment in an umated state. Figure 19 is an exploded view of a portion of the battery connector system 100 showing the jumper 108 in accordance with an exemplary embodiment.

In an exemplary embodiment, the jumper 108 includes a telescoping jumper contact 190 having an inner member 191 and an outer member 192 movable relative to the inner member 191. A cover 193 surrounds portions of the inner and outer members 191, 192. In the illustrated embodiment, the inner member 191 includes a first ball 194 and a first shaft 195 extending from the first ball 194. The outer member 192 includes a second ball 196 and a second shaft 197 extending from the second ball 196. The first shaft 195 is received in the second shaft 197 and is slidable relative to the second shaft 197 to increase or decrease the length of the jumper 108. The cover 193 covers the first and second shafts 195, 197. The jumper contact 190 defines the jumper conductor 110. The jumper contact 190 electrically connects the first and second battery contacts 200, 300 in the mated position.

In an exemplary embodiment, the first battery contact 200 includes a louvered clip contact 290 or spring clip contact having clip arms 291, 293 forming a first pocket 292. The first ball 194 is received in the first pocket 292 between the clip arms 291, 293. The clip arms 291, 293 are configured to be clipped onto the first ball 194 to retain the first ball 194 in the first pocket 292. The clip arms 291, 293 define the separable mating interface 206 at the mating end 202 that allows separation of the jumper Col. eight from the first battery contact 200. The clip arms 291, 293 may be curved, such as having a curvature similar to the curvature of the first ball 194. The first ball 194 is rotatable in the joint formed by the louvered clip contact 290. In an exemplary embodiment, the louvered clip contact 290 includes a base 296 defining the terminating end 204. The base 296 is configured to be terminated to the battery terminal 40. For example, the base 296 may be welded to the battery terminal 40. The base 296 may be secured by other means in alternative embodiments, such as using a threaded fastener.

In an exemplary embodiment, the second battery contact 300 includes a louvered clip contact 390 or spring clip contact having clip arms 391, 393 forming a second pocket 392. The second ball 196 is received in the second pocket 392 between the clip arms 391, 393. The clip arms 391, 393 are configured to be clipped onto the second ball 196 to retain the second ball 196 in the second pocket 392. The clip arms 391, 393 define the separable mating interface 306 at the mating end 302 that allows separation of the jumper Col. eight from the second battery contact 300. The clip arms 391, 393 may be curved, such as having a curvature similar to the curvature of the second ball 196. The second ball 196 is rotatable in the joint formed by the louvered clip contact 390. In an exemplary embodiment, the louvered clip contact 390 includes a base 396 defining the terminating end 304. The base 396 is configured to be terminated to the battery terminal 40. For example, the base 396 may be welded to the battery terminal 40. The base 396 may be secured by other means in alternative embodiments, such as using a threaded fastener.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

## Claims

1. An electric vertical takeoff and landing (eVTOL) battery connector assembly (102) comprising:
a first battery connector (104) having a first battery contact (200), the first battery contact (200) having a first separable mating interface (206), the first battery contact (200) being electrically connected to a first battery terminal (40) of a first eVTOL battery module (10);
a second battery connector (106) having a second battery contact (300), the second battery contact (300) having a second separable mating interface (306), the second battery contact (300) being electrically connected to a second battery terminal (40) of a second eVTOL battery module (12); and
a jumper (108) electrically connecting the first battery connector (104) and the second battery connector (106), the jumper (108) including a jumper conductor (110) having a first end (112) and a second end (114), the first end (112) of the jumper conductor (110) being electrically connected to the first battery contact (200), the second end (114) of the jumper conductor (110) being electrically connected to the second battery contact (300).

2. The eVTOL battery connector assembly (102) of claim 1, wherein the first battery contact (200) is connected to the first battery terminal (40) at the first separable mating interface (206) and the second battery contact (300) is connected to the second battery terminal (40) at the second separable mating interface (306).

3. The eVTOL battery connector assembly of claim 1 or 2, wherein the first battery contact (200) includes a spring finger (232) at the first separable mating interface (206), the spring finger (232) being slidably coupled to the first battery terminal (40), the second battery contact (300) including a spring finger (332) at the second separable mating interface (306), the spring finger (332) being slidably coupled to the second battery terminal (40).

4. The eVTOL battery connector assembly (102) of any preceding claim, wherein the first end (112) of the jumper conductor (110) is electrically connected to the first battery contact (200) at a compression connection and the second end (114) of the jumper conductor (110) is electrically connected to the second battery contact (300) at a compression connection.

5. The eVTOL battery connector assembly (102) of any preceding claim, wherein the first separable mating interface mates to the second separable mating interface.

6. The eVTOL battery connector assembly (102) of any preceding claim, wherein the first battery connector (104) includes a first connector housing (210) holding the first battery contact (200) and the second battery connector (106) includes a second connector housing (310) holding the second battery contact (300).

7. The eVTOL battery connector assembly (102) of claim 6, wherein the first battery connector (104) includes a first seal (118) coupled to the first connector housing (210) and configured to be coupled to a first shroud (50) extending from the first battery module (10) that covers the first battery terminal (40), and wherein the second battery connector (106) includes a second seal (118) coupled to the second connector housing (310) and configured to be coupled to a second shroud (50) extending from the second battery module (12) that covers the second battery terminal (40).

8. The eVTOL battery connector assembly (102) of claim 6 or 7, wherein the first battery connector (104) includes a first latch (224) coupled to the first connector housing (210) and configured to be coupled to a first shroud (50) extending from the first battery module (10) and covering the first battery terminal (40), and wherein the second battery connector (106) includes a second latch (324) coupled to the second connector housing (310) and configured to be coupled to a second shroud (50) extending from the second battery module (12) and covering the second battery terminal (40).

9. The eVTOL battery connector assembly (102) of claim 6, 7 or 8 wherein the first connector housing (210) includes a fire resistant barrier surrounding the first battery contact (200) and wherein the second connector housing (310) includes a fire resistant barrier surrounding the second battery contact (300).

10. The eVTOL battery connector assembly (102) of claim 1, wherein the jumper conductor (110) includes a first jumper contact (144) at the first end and a second jumper contact (154) at the second end.

11. The eVTOL battery connector assembly (102) of claim 10, wherein the first jumper contact (144) is coupled to the second jumper contact (154) at a separable interface, the jumper (108) including a first housing member (142) holding the first jumper contact (144) and a second housing member (152) holding the second jumper contact (154), the first housing member (142) being separated from the second housing member (152) to separate the first and second jumper contacts (144, 154).

12. The eVTOL battery connector assembly (102) of any preceding claim, wherein the jumper (108) includes a first housing member (142) and a second housing member (152), the first housing member (142) configured to be coupled to a chassis (16) of a vehicle (14) holding the first and second battery modules (10, 12) at a location between the first and second battery modules (10, 12), the second housing member (152) being rotatable relative to the first housing member (142), the second housing member (152) holding the jumper conductor (110) and moving the jumper conductor (110) between a mated position and an unmated position, the jumper conductor (110) being mated to the first and second battery contacts (200, 300) in the mated position, the jumper conductor (110) being unmated from the first and second battery contacts (200, 300) in the unmated position.

13. The eVTOL battery connector assembly (102) of claim 1, wherein the first battery contact (200) includes a louvered clip contact (290) having a first pocket (292) and the second battery contact (300) includes a louvered clip contact (390) having a second pocket (392), the jumper (108) including a first ball (194) at the first end received in the first pocket (292) and a second ball (196) at the second end received in the second pocket (329), the first ball (194) being movable relative to the second ball (196).

14. The eVTOL battery connector assembly (102) of claim 1, wherein the jumper (108) includes a busbar (130), the first battery contact (200) being mounted to a bottom (34) of the first battery module (10) and coupled to the busbar (130) when the first battery module (10) is loaded into a chassis (16) of a vehicle (14), the second battery contact (300) being mounted to a bottom (34) of the second battery module (12) and coupled to the busbar (130) when the second battery module 12 is loaded into the chassis (16) of the vehicle (14).
